# EUROPEAN PATENT APPLICATION

(11) **EP 3 674 875 A1**
(43) Date of publication of application: **01.07.2020**
(21) Application number: 17929009.3
(22) Date of filing: 25.12.2017
(51) Int. Cl.: G06F 3/0488

(54) **INFORMATION PROCESSING TERMINAL DEVICE**

(30) Priority: 17.10.2017 JP 2017200858
(71) Applicant: NTT DOCOMO, INC., Chiyoda-ku Tokyo 100-6150 (JP)
(72) Inventor: ITOU, Takurou, Tokyo 100-6150 (JP)
(74) Representative: Hoffmann Eitle
(86) International application number: PCT/JP2017/046430
(87) International publication number: WO 2019/077766

(57) **Abstract**

An information processing terminal (1) includes: a display control unit that displays content that includes a plurality of selectable objects on a touch screen (10); a specification determination unit (111) that determines whether or not a pinch-in operation performed on the touch screen is a specifying operation performed to specify one or more objects included in the content displayed on the touch screen; and a saving unit (102) that, upon the pinch-in operation being determined as the specifying operation, saves the one or more objects specified by the specifying operation onto the clipboard.

## Description

### Technical Field

The present invention relates to a user interface technology.

### Background Art

Patent Literature 1 discloses a technology for, upon detecting a press-and-hold gesture on editable content displayed on a touch screen display, displaying a content magnifier that magnifies the editable content so that the user can select the content, and copying the selected content.

### Citation List

### Patent Literature

Patent Literature 1: JP 2017-79073A

### Summary of Invention

### Technical Problem

With an apparatus that has a touch screen, such as a smartphone, if the user wishes to paste a copy of an object displayed on the screen such as characters or images to another place, the user needs to perform a series of operations such as operations to press and hold the object to display a pop-up menu, select "copy" from the pop-up menu, press and hold a place at which the copied object is to be pasted, thereby displaying a pop-up menu, and select "paste" from the pop-up menu, according to the technology disclosed in Patent Literature 1, for example. Such a series of operations is troublesome and takes time.

Therefore, the present invention aims to reduce the time and effort required when pasting an object displayed on a touch screen to another place.

### Solution to Problem

One aspect of the present invention provides an information processing terminal including: a display control unit that displays content that includes a plurality of selectable objects on a touch screen; a specification determination unit that determines whether or not a pinch-in operation performed on the touch screen is a specifying operation performed to specify one or more objects included in the content displayed on the touch screen; and a saving unit that, upon the pinch-in operation being determined as the specifying operation, saves the one or more objects specified by the specifying operation onto the clipboard.

Another aspect of the present invention provides an information processing terminal including: an instruction determination unit that, upon a pinch-out operation being performed on a touch screen, determines whether or not the pinch-out operation is an instructing operation that provides an instruction to paste an object saved on a clipboard; and a display control unit that displays content that includes a plurality of selectable objects on a touch screen, and, upon the pinch-out operation being determined as the instructing operation, displays, on the touch screen, content generated by inserting the object saved on the clipboard into the content displayed on the touch screen.

According to a preferable aspect, when the pinch-in operation is performed, the specification determination unit determines that the pinch-in operation is the specifying operation if a position different from positions on which the pinch-in operation is performed is touched.

According to a preferable aspect, the specification determination unit determines that the pinch-in operation is the specifying operation if two positions touched first in the pinch-in operation are continuously touched for no less than a predetermined period.

According to a preferable aspect, the content is constituted by the plurality of objects arranged on the touch screen according to a predetermined rule, and the first detector accepts an operation performed to select objects included in a range from a first object displayed at a first touch position to a second object displayed at a second touch position of the pinch-in operation, as the selecting operation.

According to a preferable aspect, upon a trace operation through which a plurality of objects arranged along a predetermined rule are traced being performed with a position different from positions related to the trace operation being touched, the first detector accepts the operation performed to select the objects specified through the trace operation, as the selecting operation.

According to a preferable aspect, the instruction determination unit determines the pinch-out operation as the instructing operation if the pinch-out operation is performed in a state where a position different from positions related to the pinch-out operation is touched.

According to a preferable aspect, the instruction determination unit determines the pinch-out operation as the instructing operation if the pinch-out operation is performed in a state where the paste location is specified through the accepted specifying operation.

According to a preferable aspect, the instruction determination unit determines the pinch-out operation as the instructing operation if two positions touched first in the pinch-out operation are continuously touched for no less than a predetermined period.

### Effects

According to the present invention, it is possible to reduce the time and effort required when pasting an object displayed on a touch screen to another place.

### Brief Description of Drawings

FIG. 1 is a diagram showing a hardware configuration of a smartphone according to an embodiment.
FIG. 2 is a diagram showing a functional configuration realized by the smartphone.
FIG. 3 is a diagram showing an example of a selecting operation performed to select an object.
FIG. 4 is a diagram showing an example of a pinch-in operation performed as a specifying operation.
FIG. 5 is a diagram showing an example of a pinch-out operation performed as a specifying operation.
FIG. 6 is a diagram showing an example of an operation procedure for save processing.
FIG. 7 is a diagram showing an example of an operation procedure for paste processing.
FIG. 8 is a diagram showing an example of a selecting operation performed to select an object according to a modification.
FIG. 9 is a diagram showing an example of a specifying operation according to a modification.
FIG. 10 is a diagram showing an example of an instructing operation according to a modification.
FIG. 11 is a diagram showing examples of operation procedures for save processing and paste processing according to a modification.

### Description of Embodiments

### 1. Embodiment

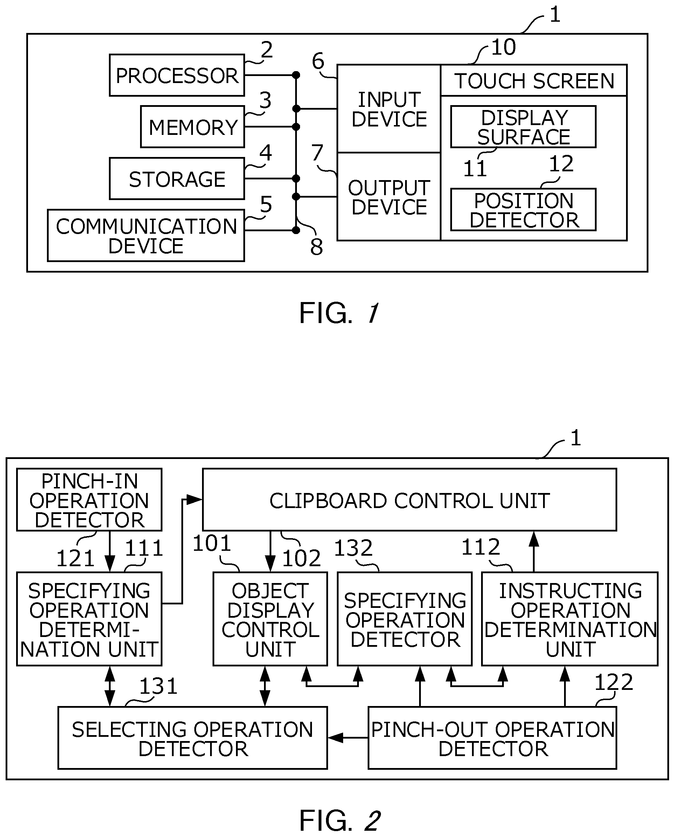

FIG. 1 shows a hardware configuration of smartphone 1 according to an embodiment. Smartphone 1 is a computer that includes devices, namely processor 2, memory 3, storage 4, communication device 5, input device 6, output device 7, and bus 8. Note that the term "device" is interchangeable with "circuit", "device", "unit", or the like.

Note that each kind of device may be included as one or more devices, and some of the devices may be omitted. Processor 2 operates an operating system to control the entire computer, for example. Processor 2 may be constituted by a CPU (Central Processing Unit) that includes an interface with peripheral devices, a control device, an arithmetic device, a register, and so on.

Processor 2 reads out programs (program codes) including an OS (Operating System) and various kinds of application software (hereinafter also simply referred to as "applications"), software modules, data, and so on from storage 4 and/or communication device 5 to memory 3, and performs various kinds of processing according to them. Processor 2 that performs various kinds of processing may be provided as one, two, or more processors 2, and two or more processors 2 may simultaneously or sequentially perform various kinds of processing.

Also, processor 2 may be implemented using one or more chips. The programs may be transmitted from a network via an electrical communication line. Memory 3 is a computer-readable recording medium, and may be constituted by at least one of: a ROM (Read Only Memory); an EPROM (Erasable Programmable ROM); an EEPROM (Electrically Erasable Programmable ROM); a RAM (Random Access Memory); and so on, for example. Memory 3 may be referred to as a register, a cache, a main memory (a main storage device), or the like.

Memory 3 can store the above-described programs (program codes), software modules, data, and so on. Storage 4 is a computer-readable recording medium, and may be constituted by at least one of: a hard disk drive; a flexible disk; a flash memory (e.g. a card, a stick, or a key drive); a magnetic strip; and so on, for example.

Storage 4 may be referred to as an auxiliary storage device. The aforementioned storage medium may be a database, a server, or another appropriate medium including memory 3 and/or storage 4, for example. Communication device 5 is hardware (a transmission/reception device) for performing communication between computers via a wired and/or wireless network, and may also be referred to as a network device, a network controller, a network card, a communication module.

Input device 6 is an input device that accepts inputs from the exterior (e.g. a microphone, a switch, a button, or a sensor). Output device 7 is an output device that makes outputs to the exterior (e.g. a display, a speaker, or an LED lamp). In smartphone 1, input device 6 and output device 7 are configured integrally and constitute touch screen 10.

Touch screen 10 is an output device that displays images, and, at the same time, is an input device that accepts user operations. Touch screen 10 includes display surface 11 that displays images, and position detection sensor 12 that detects a position where the user has touched (a touch position) on display surface 11. In the present embodiment, a sensor that can simultaneously detect two touch positions is employed as position detection sensor 12. Thus, touch screen 10 accepts an input indicated by two touch positions.

Devices such as processor 2 and memory 3 can access each other via bus 8 for communicating information. Bus 8 may be constituted by as a single bus, or different buses may be provided between devices. Smartphone 1 may be configured including hardware such as a microprocessor, a DSP (Digital Signal Processor), an ASIC (Application Specific Integrated Circuit), a PLD (Programmable Logic Device), an FPGA (Field Programmable Gate Array), and the like, and one or more or all of the function blocks may be realized by that hardware. For example, processor 2 may be implemented using at least one of these kinds of hardware.

Processor 2 of smartphone 1 executes programs and controls each device, thereby realizing the functions described below.

FIG. 2 is a diagram showing a functional configuration realized by smartphone 1. Smartphone 1 includes object display control unit 101, clipboard control unit 102, specifying operation determination unit 111, instructing operation determination unit 112, pinch-in operation detector 121, pinch-out operation detector 122, selecting operation detector 131, and specifying operation detector 132.

Object display control unit 101 displays an image including one or more objects on touch screen 10. Object display control unit 101 is an example of the "display control unit" according to the present invention. An object is, for example, a character string, a photographic image, a rendered image (so-called CG (Computer Graphics)), an image representing data, or an image representing a program (an icon, a shortcut image, etc.).

Data representing such an object is stored in a storage means such as memory 3, storage 4, or an external device that is accessible via communication device 5. Object display control unit 101 reads out data representing an object from such a storage mans, generates an image including the read out object (such as an image of the screen of an application or an image of a webpage), and displays the generated image on the touch screen 10.

Pinch-in operation detector 121 accepts a pinch-in operation performed on touch screen 10. A pinch-in operation is an operation performed by touching two positions on touch screen 10 and moving the two touch positions closer to each other. For example, when two touch positions are detected, pinch-in operation detector 121 repeatedly calculates the distance therebetween at predetermined time intervals (e.g. every 0.1 seconds), and accepts an operation as a pinch-in operation when the calculated distance has decreased by a certain length or a certain proportion. Note that a method for accepting a pinch-in operation is not limited to this method, and another well-known method may be used.

Pinch-out operation detector 122 accepts a pinch-out operation performed on touch screen 10. A pinch-out operation is an operation performed by touching two positions on touch screen 10 and moving the two touch positions away from each other. For example, when two touch positions are detected, pinch-out operation detector 122 repeatedly calculates the distance therebetween at predetermined time intervals (e.g. every 0.1 seconds), and accepts an operation as a pinch-out operation when the calculated distance has increased by a certain length or a certain proportion. Note that a method for accepting a pinch-out operation is not limited to this method, and another well-known method may be used.

Selecting operation detector 131 accepts a selecting operation performed to select an object displayed on touch screen 10. Selecting operation detector 131 is an example of the "first detector" according to the present invention. In the present embodiment, selecting operation detector 131 accepts a pinch-out operation performed on touch screen 10 that displays objects arranged in one or more rows or one or more columns, as a selecting operation performed to select the objects arranged from the object displayed at a first touch position to the object displayed at a second touch position of the pinch-out operation.

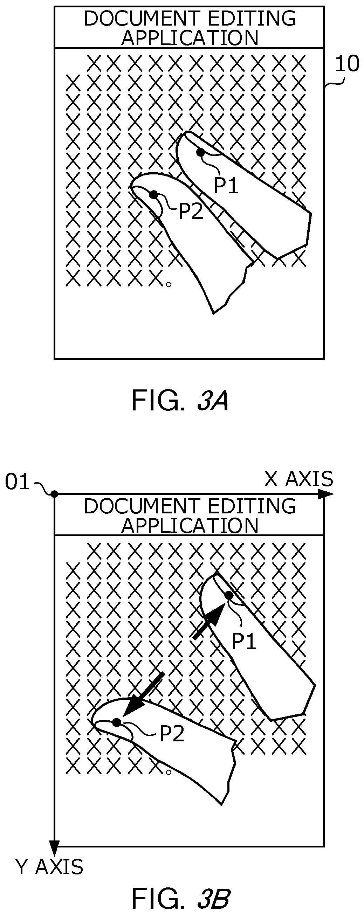

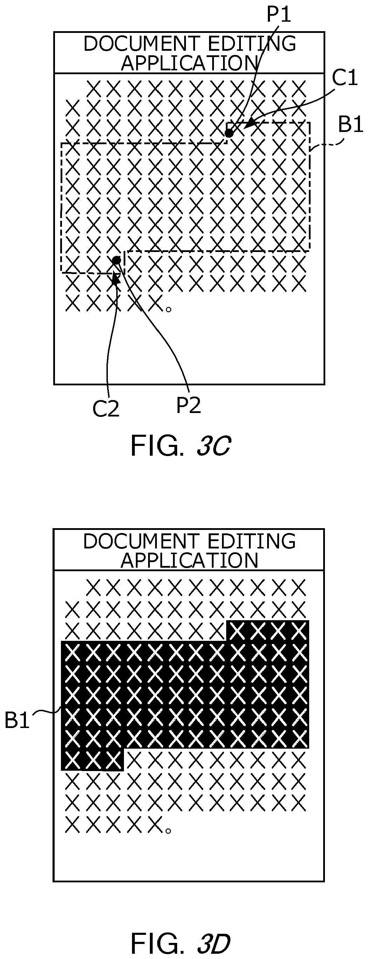

In the following example, it is assumed that an image to which processing other than a pinch-in operation or a pinch-out operation (e.g. reduction display processing, enlargement display processing, etc.) is not assigned is displayed. FIG. 3 shows an example of a selecting operation performed to select an object.

In FIG. 3, object display control unit 101 displays a character string edited by a document editing application on touch screen 10, as objects arranged in one or more rows.

In this example, in a state where the user touches touch position P1 and touch position P2 on touch screen 10 as shown in FIG. 3A, the user performs an operation to increase the distance between touch position P1 and touch position P2 as shown in FIG. 3B, i.e. a pinch-out operation. Upon accepting this pinch-out operation, pinch-out operation detector 122 supplies selecting operation detector 131 with the coordinates of touch position P1 and touch position P2 every time two touch positions are detected.

These coordinates are, for example, coordinates in a coordinate system centered around a given point on display surface 11. The present embodiment employs a coordinate system represented by an X axis extending in the left-right direction and a Y axis extending in the top-bottom direction, with point O1 at the upper left corner of display surface 11 being defined as the origin. Upon being supplied with the coordinates of touch position P1 and touch position P2, selecting operation detector 131 acquires information regarding objects that are displayed (object related information) from object display control unit 101.

In the example shown in FIG. 3, selecting operation detector 131 acquires information indicating characters included in a character string, the central coordinates and sizes of the characters, and the direction in which the characters are arranged (a row or a column), as object related information. Selecting operation detector 131 specifies character C1 displayed at touch position P1 and character C2 displayed at touch position P2 from the acquired object related information as shown in FIG. 3(c), and specifies a character string B1 in the range from character C1 to character C2.

Thus, selecting operation detector 131 accepts a pinch-out operation shown in FIG. 3A and FIG. 3B as a selecting operation performed to select the specified character string B1, i.e. the objects (character string B1) in the range from the object (character C1) displayed at the first touch position (touch position P1) to the object (character C2) displayed at the second touch position (touch position P2).

Selecting operation detector 131 supplies object display control unit 101 with information that can specify the specified character string B1 (e.g. information indicating the numbers of characters from the first character to characters C1 and C2 (32 and 98)), as information (object information) indicating the selected objects. Object display control unit 101 highlights character string B1 indicated by the supplied object information as shown in FIG. 3(d) (e.g. background color inversion). As a result, the user can discern the objects selected through the pinch-out operation.

When the user moves touch position P1 and touch position P2 without releasing their fingers from touch screen 10, the characters displayed at the two touch positions change, and accordingly the objects to be selected change, i.e. the character string to be highlighted changes. At this time, even if the distance between touch position P1 and touch position P2 is reduced, once selecting operation detector 131 has accepted the pinch-out operation as a selecting operation, selecting operation detector 131 determines touch position P1 and touch position P2, the distance therebetween has been thus reduced, as the two touch positions of the accepted selecting operation.

Upon the user releasing their fingers from touch screen 10 when the desired character string is highlighted, selecting operation detector 131 accepts the pinch-out operation as a selecting operation performed to select the ultimately specified character string as the selected objects. Thus, on smartphone 1, it is possible to select objects while changing both the head of the objects to be selected (e.g. the character displayed at touch position P1) and the tail of the same (e.g. the character displayed at touch position P2) through a pinch-out operation.

Even after the user has released their fingers, object display control unit 101 keeps highlighting the selected character string B1. Objects thus selected through a pinch-out operation are confirmed when the user releases their fingers from touch screen 10. Selecting operation detector 131 holds object information indicating the selected objects (character string B1 in the example in FIG. 3) until a selecting operation is performed again.

Although the character string in the example in FIG. 3 is written in a horizontal direction, it is possible to select the character string in the same manner even if the character string is written in a vertical direction. Also, even if content includes not only characters but also photographic images, CGs, or the like as objects, a selecting operation performed to select objects can be accepted through the method described with reference to FIG. 3 as long as the photographic images, the CGs, or the like are arranged according to a predetermined rule. In such a case, selecting operation detector 131 accepts a pinch-out operation as a selecting operation performed to specify characters, photographic images, CGs, or the like displayed at the first touch position and the second touch position, and select the characters, photographic images, CGs, or the like arranged from the first touch position to the second touch position.

specifying operation determination unit 111, upon a pinch-in operation being performed on touch screen 10 on which an object is displayed, determines whether or not the pinch-in operation is a specifying operation performed to specify the object. Specifying operation determination unit 111 is an example of the "specification determination unit" according to the present invention. There are two methods for specifying an object. The first method is specification of an object that is a target (a target to be duplicated) of a so-called copy and paste operation through which a file, data, or the like is duplicated in another location.

The second method is specification of an object that is a target (a target to be moved) of a so-called cut and paste operation through which a file, data, or the like is moved to another location. In the present embodiment, specifying operation determination unit 111 determines a pinch-in operation performed in a state where an object displayed on touch screen 10 is selected (e.g. a state in which the object is highlighted as in FIG. 3(d)), as a specifying operation performed to specify the object as a target to be duplicated or a target to be moved.

For example, if a movement direction in which touch positions are moved through a pinch-in operation is included in a first range, specifying operation determination unit 111 determines that the pinch-in operation is a specifying operation performed to specify the object as a target to be duplicated, and if the movement direction is included in a second range, specifying operation determination unit 111 determines that the pinch-in operation is a specifying operation performed to specify the object as a target to be moved. For example, the first range is a range in which the angle formed with the direction along the X axis (the X axis direction) is ±10 degrees, and the second range is a range in which the angle formed with the direction along the Y axis (the Y axis direction) is ±10 degrees (these ranges are examples, and the ranges may be different from these examples).

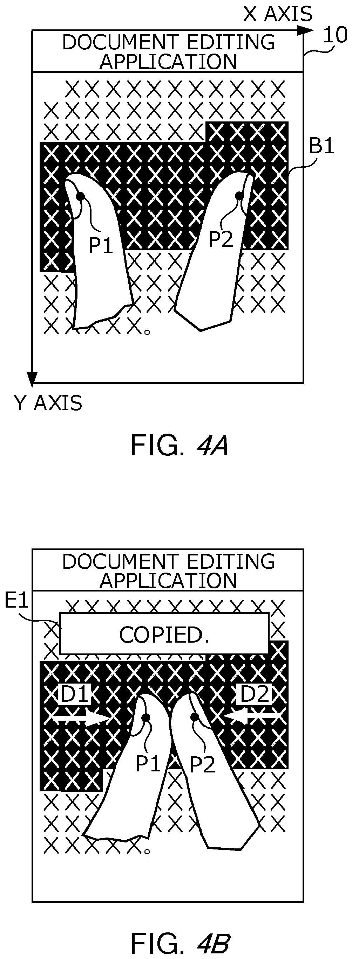

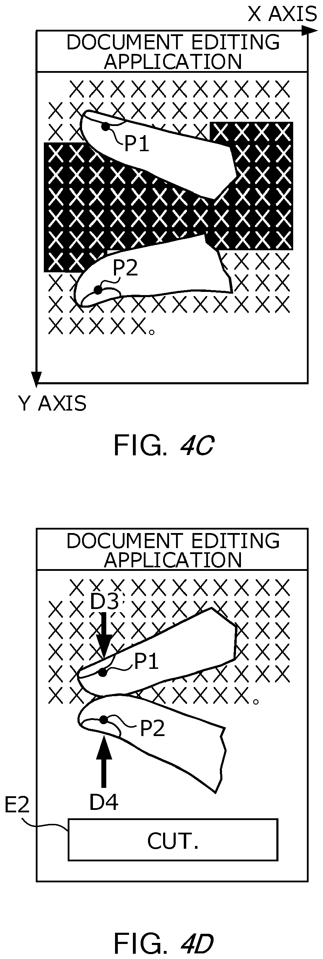

FIG. 4 shows examples of a pinch-in operation performed as an object specifying operation. In FIG. 4, character string B1 shown in FIG. 3(d) is in a selected state (highlighted state). In these examples, in a state where the user touches touch position P1 and touch position P2 on touch screen 10 as shown in FIG. 4A and FIG. 4C, the user performs an operation to reduce the distance between touch position P1 and touch position P2 as shown in FIG. 4B and FIG. 4D, i.e. a pinch-in operation.

In the example shown in FIG. 4A and FIG. 4B, touch position P1 is moved in X axis positive direction D1, and touch position P2 is moved in X axis negative direction D2. In the example shown in FIG. 4C and FIG. 4D, touch position P1 is moved in Y axis positive direction D3, and touch position P2 is moved in Y axis negative direction D4. Upon accepting a pinch-in operation, pinch-in operation detector 121 supplies specifying operation determination unit 111 with the records of the coordinates of touch position P1 and touch position P2 representing the pinch-in operation. Even after accepting the pinch-in operation, pinch-in operation detector 121 supplies specifying operation determination unit 111 with the coordinates of the touch positions every time the touch positions are continuously detected.

Upon being supplied with coordinates from pinch-in operation detector 121, specifying operation determination unit 111 determines whether the movement direction of the touch positions moved through the pinch-in operation, which is indicated by the supplied coordinates, is included in the first range or the second range described above. In the example shown in FIG. 4A and FIG. 4B, specifying operation determination unit 111 determines that the movement direction is included in the first range. In the example shown in FIG. 4C and FIG. 4D, specifying operation determination unit 111 determines that the movement direction is included in the second range.

Upon determining that the movement direction is included in either range, specifying operation determination unit 111 acquires object information if selecting operation detector 131 holds object information. Upon determining that the movement direction is included in the first range, specifying operation determination unit 111 determines that the accepted pinch-in operation is a specifying operation performed to specify the object indicated by the acquired object information, as a target to be duplicated.

Upon determining that the movement direction is included in the second range, specifying operation determination unit 111 determines that the accepted pinch-in operation is a specifying operation performed to specify the object indicated by the acquired object information, as a target to be moved. Upon determining that the specified object is either a target to be duplicated or a target to be moved, specifying operation determination unit 111 supplies clipboard control unit 102 with the acquired object information together with information indicating whether the specified object is a target to be duplicated or a target to be moved.

Clipboard control unit 102 controls a clipboard that is a shared memory area on which data can be temporarily stored. For example, upon specifying operation determination unit 111 determining that the pinch-in operation is a specifying operation performed to specify an object, clipboard control unit 102 saves the object specified through the specifying operation, on the clipboard. Clipboard control unit 102 is an example of the "saving unit" according to the present invention.

Clipboard control unit 102 saves the object specified through the specifying operation (character string B1 in the example in FIG. 4) on the clipboard by saving the object indicated by the object information supplied from specifying operation determination unit 111, on the clipboard. Upon being supplied with information indicating that the object is a target to be duplicated together with object information, clipboard control unit 102 saves the object on the clipboard and thereafter notifies object display control unit 101 of the fact.

Upon receiving this notification, object display control unit 101 displays, for example, character string E1 that says "copied.", as shown in FIG. 4B, as information indicating that the object to be duplicated has been saved on the clipboard. Also, upon being supplied with information indicating that the object is a target to be moved together with object information, clipboard control unit 102 instructs object display control unit 101 to delete the object indicated by the object information.

Upon receiving this instruction, object display control unit 101 deletes character string B1, which is the indicated object, as shown in FIG. 4D, and displays the remaining character string on touch screen 10. Also, object display control unit 101 displays, for example, character string E2 that says "cut.", as shown in FIG. 4D, as information indicating that the object to be moved has been deleted, on touch screen 10.

This concludes a description of the constituent elements related to saving an object onto the clipboard. Next, constituent elements related to pasting an object on the clipboard will be described. Specifying operation detector 132 accepts a specifying operation performed to specify a paste location to which an object is to be pasted. Specifying operation detector 132 is an example of the "second detector" according to the present invention. In the present embodiment, specifying operation detector 132 accepts a specifying operation performed to specify a paste location, in the same manner as selecting operation detector 131.

Specifically, specifying operation detector 132 accepts a pinch-out operation performed on touch screen 10 that displays selectable objects arranged according to a predetermined rule, as a specifying operation performed to specify an area in which the objects arranged from the object displayed at the first touch position to the object displayed at the second touch position of the pinch-out operation are displayed, as a paste location. Objects arranged according to a predetermined rule are characters that are arranged at predetermined intervals in one or more rows or one or more columns (a text document), for example.

Upon accepting a pinch-out operation, pinch-out operation detector 122 supplies specifying operation detector 132 with the coordinates of two touch positions indicating the pinch-out operation every time two touch positions are detected. Upon being supplied with the coordinates, specifying operation detector 132 acquires object related information from object display control unit 101. Specifying operation detector 132 specifies one or more objects (e.g. one or more characters) displayed at the two touch positions, from the acquired object related information, and specifies objects (e.g. a character string) arranged between these objects.

Specifying operation detector 132 accepts the pinch-out operation as a specifying operation performed to specify the area in which the specified objects, i.e. the objects included in the range from the first object displayed at the first touch position to the second object displayed at the second touch position, as the paste location. Specifying operation detector 132 supplies object display control unit 101 with information with which the specified objects can be specified (e.g. information indicating the order in which the objects are arranged from the head), as information indicating the specified paste location (paste location information).

Object display control unit 101 highlights the objects displayed in the paste location indicated by the supplied paste location information. As a result, the user can discern the paste location specified through the pinch-out operation. Note that, if a position between objects that are adjacent to each other is specified as a paste location (an insertion position on which so-called insertion is performed), specifying operation detector 132 supplies object display control unit 101 with information with which the objects before and after the insertion position can be specified, and information indicating that the insertion position has been specified, as paste location information.

In such a case, object display control unit 101 makes the paste location (the insertion position) discernable by blinking a cursor image at the insertion position. The paste location is confirmed when the user releases their fingers with which the user performed the pinch-out operation, as in the case of the selected objects described above. Specifying operation detector 132 holds paste location information indicating the specified paste location until another operation is performed. As in the case of selecting objects, it is also possible to specify a paste location even if a character string is written in a vertical direction, or a paste location includes a photographic image, a CG, or the like.

Upon a pinch-out operation being performed on touch screen 10, instructing operation determination unit 112 determines whether or not the pinch-out operation is an instructing operation that provides an instruction to paste the objects saved on the clipboard. Instructing operation determination unit 112 is an example of the "instruction determination unit" according to the present invention. Instructing operation determination unit 112 determines a pinch-out operation performed in a state where a paste location has been specified, as an instructing operation that provides an instruction to paste the objects saved on the clipboard, to the paste location.

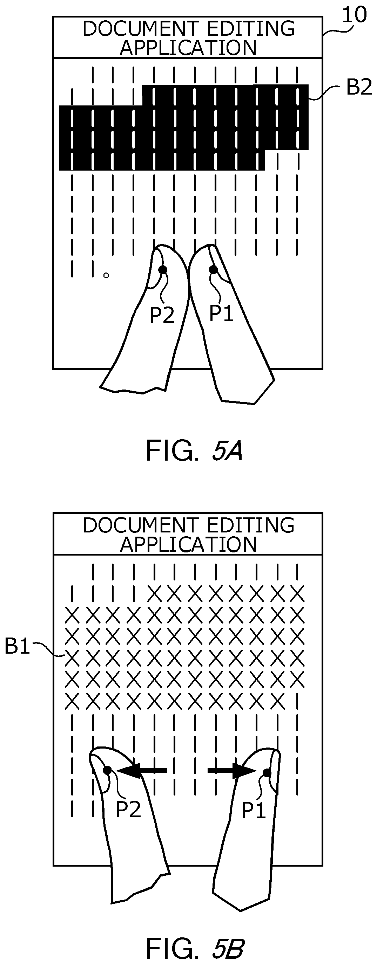

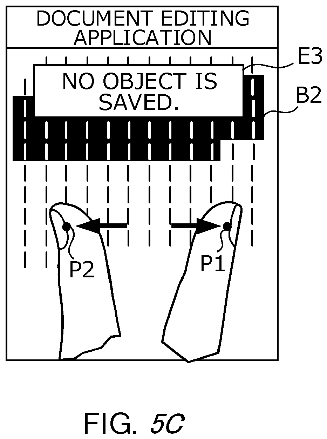

FIG. 5 shows an example of a pinch-out operation performed as a paste instructing operation. In FIG. 5, character string B2 included in the character string edited using a document editing application is specified (highlighted) as a paste location. In a state where the user touches touch position P1 and touch position P2 on touch screen 10 as shown in FIG. 5A, the user performs an operation to increase the distance between touch position P1 and touch position P2 as shown in FIG. 5B, i.e. a pinch-out operation.

Upon accepting a pinch-out operation, pinch-out operation detector 122 notifies instructing operation determination unit 112 of this fact. Upon receiving this notification, instructing operation determination unit 112 acquires paste location information if specifying operation detector 132 holds paste location information. Upon acquiring paste location information, instructing operation determination unit 112 determines that the pinch-out operation is a paste instructing operation because the pinch-out operation is an operation performed in a state where the paste location is specified, and instructing operation determination unit 112 supplies clipboard control unit 102 with the acquired paste location information.

Upon being supplied with paste location information, clipboard control unit 102 references the clipboard to determine whether or not an object is saved thereon. Upon determining that an object is saved, clipboard control unit 102 reads out the object and supplies object display control unit 101 with the object together with paste location information. Upon determining that no object is saved, clipboard control unit 102 notifies object display control unit 101 of the fact.

Upon being supplied with an object and paste location information from clipboard control unit 102, object display control unit 101 displays the object in the paste location indicated by the paste location information. Thus, upon instructing operation determination unit 112 determining that the pinch-out operation is a paste instructing operation, object display control unit 101 displays an image in which the object saved on the clipboard (character string B1 in the example shown in FIG. 5) is pasted to the paste location specified through the specifying operation (the location in which character string B2 is displayed in the example shown in FIG. 5), on touch screen 10, as shown in FIG. 5B.

Upon being notified by clipboard control unit 102 of the fact that no object is saved, object display control unit 101 displays, for example, character string E3 that says "no object is saved." as information indicating this fact, on touch screen 10, as shown in Fig. 5(c). Thus, the user is notified of the fact that no object to be pasted is saved on the clipboard.

With the above-described configuration, smartphone 1 performs save processing through which an object is saved on the clipboard, and attachment processing through which a saved object is pasted. The operation procedures for save processing and attachment processing are started upon smartphone 1 being powered on and the OS being started up, and are performed at predetermined time intervals (e.g. every 0.5 seconds).

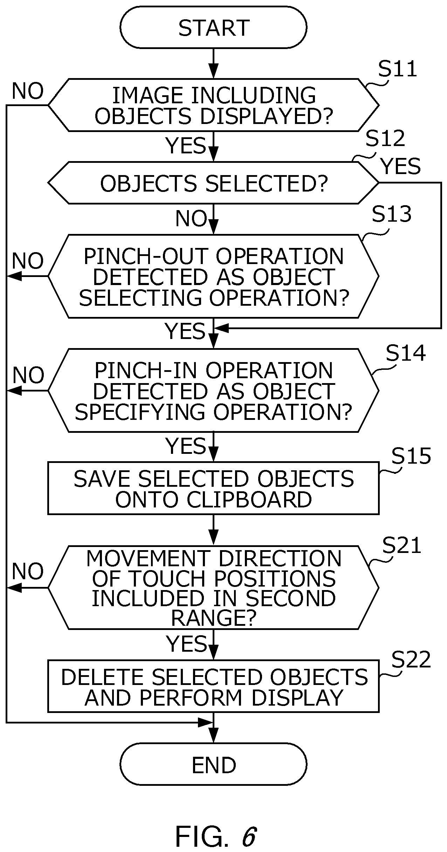

FIG. 6 is a diagram showing an example of an operation procedure for save processing. First, smartphone 1 determines whether or not an image including one or more objects is displayed on touch screen 10 (step S11). Upon determining that such an image is not displayed (NO), smartphone 1 terminates this operation procedures. Upon determining that such an image is displayed (YES) in step S11, smartphone 1 determines whether or not objects are selected (step S12).

Upon determining that objects are not selected (NO) in step S12, smartphone 1 (selecting operation detector 131) determines whether or not a pinch-out operation has been detected as an object selecting operation (step S13). Upon determining that such a pinch-out operation has not been accepted (NO), smartphone 1 terminates this operation procedure. Upon determining that objects are selected (YES) in step S12, smartphone 1 (specifying operation determination unit 111) determines whether or not a pinch-in operation has been detected as an object specifying operation (step S14). Upon determining that such a pinch-in operation has not been accepted (NO), smartphone 1 terminates this operation procedure.

Also, upon determining that a pinch-out operation has been detected as an object selecting operation in step S13 (YES), smartphone 1 (specifying operation determination unit 111) performs the operation in step S14. Upon determining that a pinch-in operation has been detected as an object specifying operation in step S14 (YES), smartphone 1 (clipboard control unit 102) saves the selected objects onto the clipboard (step S15).

Next, smartphone 1 (object display control unit 101) determines whether or not the movement direction of the touch positions of the pinch-in operation detected as an object specifying operation is included in the second range (step S21). Upon determining that the movement direction is included in the second range in step S21 (YES), smartphone 1 (object display control unit 101) deletes the selected objects (step S22) and performs display. Upon determining that the movement direction is not included in the second range (NO), smartphone 1 terminates this processing without changing the way the objects are displayed.

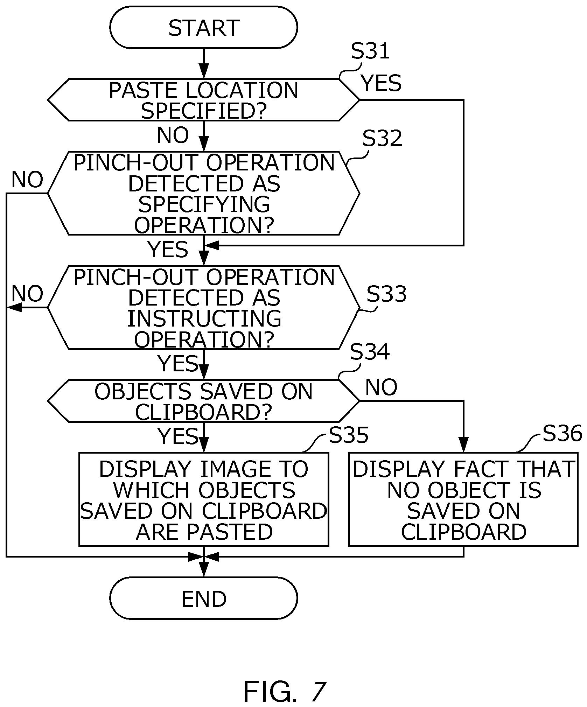

FIG. 7 shows an example of an operation procedure for paste processing. First, smartphone 1 determines whether or not a paste location is specified on touch screen 10 (step S31). Upon determining that a paste location is not specified in step S31 (NO), smartphone 1 (specifying operation detector 132) determines whether or not a pinch-out operation has been detected as a paste location specifying operation (step S32). Upon determining that such a pinch-out operation has not been determined (NO), smartphone 1 terminates this operation procedure.

Upon determining that a paste location is specified in step S31 (YES), and upon determining that a pinch-out operation has been detected as a paste location specifying operation in step S32 (YES), smartphone 1 (instructing operation determination unit 112) determines whether or not the pinch-out operation has been detected as a paste instructing operation (step S33). Upon determining that such a pinch-out operation has not been accepted (NO), smartphone 1 terminates this operation procedure.

Upon determining that the pinch-out operation has been detected as a paste instructing operation in step S33 (YES), smartphone 1 (clipboard control unit 102) determines whether or not objects are saved on the clipboard (step S34). Upon determining that objects are saved in step S34 (YES), smartphone 1 (object display control unit 101), displays an image to which the objects saved on the clipboard are pasted, on touch screen 10 (step S35). Upon determining that objects are not saved (NO), smartphone 1 displays the fact on touch screen 10 (step S36), and terminates this operation procedure.

According to a conventional method, when duplicating or moving an object displayed on touch screen 10 and pasting the objects to another plate, it is necessary to perform a series of operations, i.e. press and hold the object to display a pop-up menu, and select an option, such as copy, cut, or paste, from the menu. According to the present embodiment, an object is saved on the clipboard upon the user performing a pinch-in operation, and the object is pasted upon the user performing a pinch-out operation. Therefore, compared to conventional methods, it is possible to reduce the time and effort required when pasting an object displayed on the touch screen to another place.

Also, since a pinch-in operation is similar to an operation performed to pinch a physical object, the user can intuitively understand that this operation leads to pinching an object and saving the object on the clipboard, compared to another operation. Also, since a pinch-out operation is similar to an operation performed to release a pinched physical object, the user can intuitively understand that this operation leads to pasting the object saved on the clipboard, compared to another operation.

Also, according to a conventional method, when selecting an object, it is necessary to perform a series of operations, i.e. press and hold the object to display a pop-up menu, and select an option, such as select, or select all, from the menu. According to the present embodiment, an object is selected upon the user performing a pinch-out operation. Therefore, compared to conventional methods, it is possible to reduce the time and effort required when selecting an object.

Also, according to a conventional method, when specifying a paste location, especially in the case of specifying an area in which an object is already displayed, as a paste location, it is necessary to perform the above-described series of operations, i.e. press and hold the object to display a pop-up menu, and select an option, such as select, or select all, from the menu. According to the present embodiment, a paste location is specified upon the user performing a pinch-out operation. Therefore, compared to conventional methods, it is possible to reduce the time and effort required when specifying a paste location.

Also, according to a conventional method, when a mouse is used to select objects in a specific area of the content constituted by selectable units such as a character string, the objects are selected by the user pointing the cursor at one end (the head or the tail) of the objects in the selection target range, and performing a drag operation. In this case, the user cannot change the position at which the cursor is pointed, once the position has been selected. Therefore, if the position of the one end is incorrect, the user needs to perform the selecting operation again.

In contrast, according to the present embodiment, the user can select both of the head and tails of the objects to be selected or the paste location to be specified, while changing them through a pinch-out operation. Therefore, the user need not perform an object selecting operation or a paste location specifying operation again.

### 2. Modifications

The above-described embodiment is merely an example for carrying out the present invention, and may be modified as described below.

### 2-1. Assignment of Processing to Pinch-in Operation and Pinch-out Operation

Processing other than save or paste processing may be assigned to the pinch-in operation and the pinch-out operation in advance. It is typical to employ a UI design in which image reduction display processing is assigned to the pinch-in operation and image enlargement display processing is assigned to the pinch-out operation.

Considering such an existing UI design, it is unnecessary to uniformly apply the pinch-in operation and the pinch-in operation to all types of content that are displayed. For example, processing other than save processing or paste processing may be assigned depending on the type of content. For example, in the case of images such as a map, a photograph, and a CG, enlargement processing and reduction processing are respectively assigned to the pinch-out operation and the pinch-in operation, whereas, in the case of content such as a document, a book, and a list, enlargement processing and reduction processing are not assigned. Specifically, when content to which standard assignment is not applied is displayed, selecting operation detector 131 accepts an object selecting operation performed through the above-described pinch-in operation or pinch-in operation, whereas, when content to which standard assignment is applied is displayed, selecting operation detector 131 may accept an object selecting operation through the above-described conventional method (the method using a press and hold operation and a pop-up menu).

Even when standard assignment to the pinch-in operation and the pinch-out operation is employed, if specifying operation determination unit 111 determines an object specifying operation through the method according to the above-described embodiment, clipboard control unit 102 may save the object specified through the specifying operation, on the clipboard. For example, when a map is displayed by a map application, if a pinch-in operation is performed in a state where a specific area is specified as an object, the pinch-in operation is determined as an object specifying operation, and as a result, reduction display processing is not performed on the map, and an image in the specified area is saved on the clipboard.

Also, as with selecting operation detector 131, when content to which standard assignment is not applied is displayed, specifying operation detector 132 may accept an paste location specifying operation performed through the method according to the above-described embodiment, whereas, when content to which standard assignment is applied is displayed, specifying operation detector 132 may accept paste location specifying operation through the above-described conventional method (the method using a press and hold operation and a pop-up menu).

Also, as with specifying operation determination unit 111, when standard assignment is employed, instructing operation determination unit 112 may determine a paste instructing operation through the method according to the above-described embodiment. In such a case, instructing operation determination unit 112 determines a pinch-out operation performed in a state where a paste location is specified, as a paste instructing operation, and a pinch-out operation performed in a state where a paste location is not specified, as an operation for enlargement display processing.

In this modification, when a pinch-in operation is determined as an object specifying operation, save processing is performed to save the object to the clipboard, and when a pinch-out operation is determined as a paste instructing operation, paste processing is performed. Specifically, save processing is performed in a state where an object is selected, and paste processing is performed in a state where a paste location is specified. These states are states in which it is obvious that the user wishes to preferentially perform save processing or paste processing.

In this way, according to the present modification, when processing other than save (or delete) or paste processing is assigned to the pinch-in operation and the pinch-out operation, it is possible to realize such processing while save processing and paste processing are performed as necessary. Also, the acceptance of an object selecting operation and the specification of an object paste location may be performed through the method according to the embodiment in a case where other processing is not assigned to the pinch-in operation or the pinch-out operation, and thus it is possible to reduce the time and effort required when selecting an object and specifying a paste location, compared to a case in which a conventional method is invariably used.

### 2-2. Touch + Pinch-in Operation/Pinch-out Operation

The acceptance of an object selecting operation, the acceptance of a paste location specifying operation, the determination of an object specifying operation, and the determination of a paste instructing operation may be performed using a method different from that in the above-described embodiment. In the present modification, when a pinch-in operation or a pinch-out operation is to be performed, whether or not to accept the operation and whether or not to determine the operation are determined based on whether or not another position on touch screen 10 is touched.

For example, when the user performs an operation to trace objects that are lined up and displayed on touch screen 10 while touching another part of touch screen 10, selecting operation detector 131 accepts the operation as a selecting operation performed to select the objects traced through the operation.

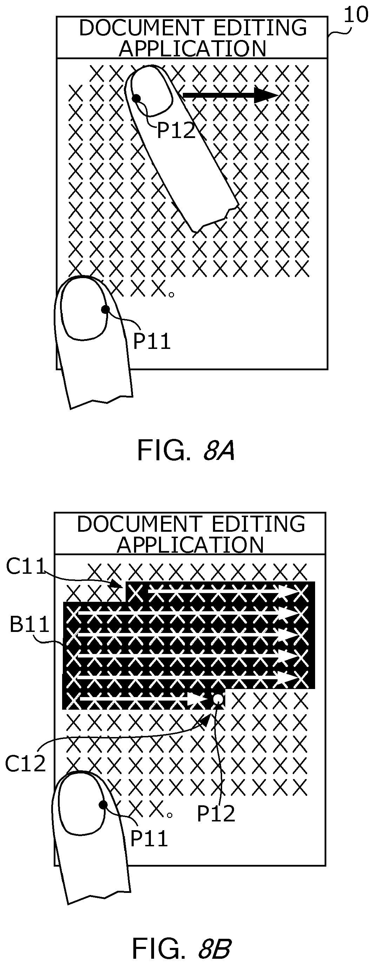

FIG. 8 shows an example of an object selecting operation according to the present modification. In FIG. 8, the character string shown in FIG. 3 is displayed as objects.

In this example, the user, who touches touch position P12 at which character C11 in the second line is displayed, with one finger, while touching position P11 in a lower left area of touch screen 10 with another finger, as shown in FIG. 8A, moves the one finger to touch position P12 at which character C12 in the seventh line is displayed, tracing the character strings in the lines, as shown in FIG. 8B. That is to say, the user performs an operation to trace character strings, which are objects lined up and displayed on touch screen 10, while touching another position (touch position P11) on touch screen 10.

Selecting operation detector 131 accepts such an operation as a selecting operation performed to select character string B11 lined up from character C11 to character C12 (the portion highlighted by object display control unit 101), which is constituted by objects traced through the operation. Selecting operation detector 131 confirms the objects selected through this selecting operation when, for example, the user released the finger with which the objects are touched. In this case, even if the user suspends the tracing operation, the user can widen the selected area again by resuming the tracing operation.

Also, when the characters on which the tracing operation is performed are not continuous (e.g. when the second line and the fifth line are traced), selecting operation detector 131 accepts such an operation as a selecting operation performed to select a non-continuous character string. Thus, it is possible to select non-continuous objects all at once. Note that, when the user performs an operation to trace a character string that has been once traced, in the reverse direction, selecting operation detector 131 may accept such an operation as an operation performed to cancel the selection of the character string. Thus, it is possible to correct the selection when the user selects unnecessary characters.

Also, selecting operation detector 131 may confirm the selected objects when the user performs a touch operation with one finger, and performs a pinch-in operation as an object specifying operation with two other fingers without releasing the one finger. Also, even when the user releases the finger touching the screen, if they touch the screen again within a predetermined period, selecting operation detector 131 may determine that the object selecting operation is continuing, and accept a selecting operation performed to select a character string that is traced, in addition to the character string that has been selected.

In a state where a position on touch screen 10 on which an image including one or more objects are displayed is touched, when a pinch-in operation is performed on positions other than the touched position, specifying operation determination unit 111 determines such an operation as a specifying operation performed to specify the objects included in the image. In this case, determination is performed regarding three touch positions. Therefore, in this modification, a sensor that can simultaneously detect three touch positions is employed as position detection sensor 12.

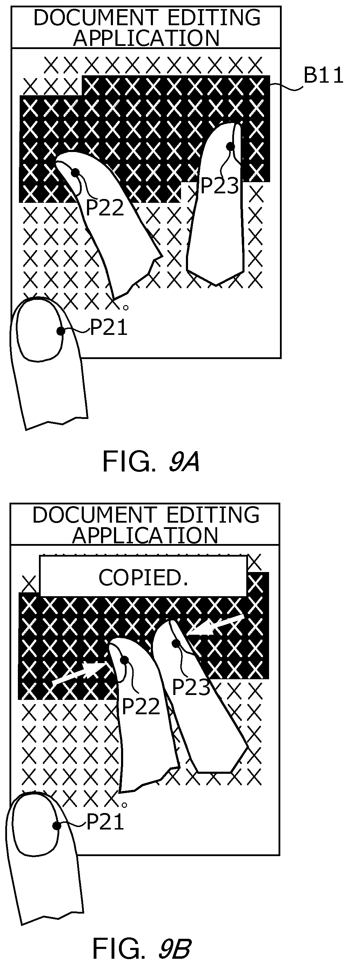

FIG. 9 shows an example of an object specifying operation according to the present modification. The example in FIG. 9 shows a state in which character string B11 is selected as described for the example in FIG. 8. In this example, in a state where the user touches touch position P22 and touch position P23 while touching touch position P21 in a lower left area of touch screen 10 as shown in FIG. 9A, the user performs an operation to reduce the distance between touch position P22 and touch position P23 as shown in FIG. 9B, i.e. a pinch-in operation.

In the case of this pinch-in operation, the movement direction of the touch positions is included in the first range. Therefore, specifying operation determination unit 111 determines this pinch-in operation as a specifying operation performed to specify the selected character string B11 as a target to be duplicated. Note that, when the movement direction of the touch positions is included in the second range, specifying operation determination unit 111 determines this pinch-in operation as a specifying operation performed to specify the selected character string B11 as a target to be moved.

When the user performs an operation to trace objects that are lined up and displayed on touch screen 10 while touching another position on touch screen 10, specifying operation detector 132 accepts such an operation as a specifying operation performed to specify the area in which the objects traced through the operation, as a paste location. Specifying operation detector 132 accepts a specifying operation performed to specify a paste location, in the same manner as selecting operation detector 131 described for FIG. 8.

Therefore, as in the example in FIG. 8, when the user performs an operation to trace character strings from character C11 to character C12 along each line while touching touch position P11, specifying operation detector 132 accepts such an operation as a specifying operation performed to specify the area in which the highlighted character string B11 is displayed, as a paste location. Instructing operation determination unit 112 determines a pinch-out operation that is performed, in a state where the touch screen is touched, on positions different from the touched position, as an instructing operation that provides an instruction to paste objects that are saved on the clipboard.

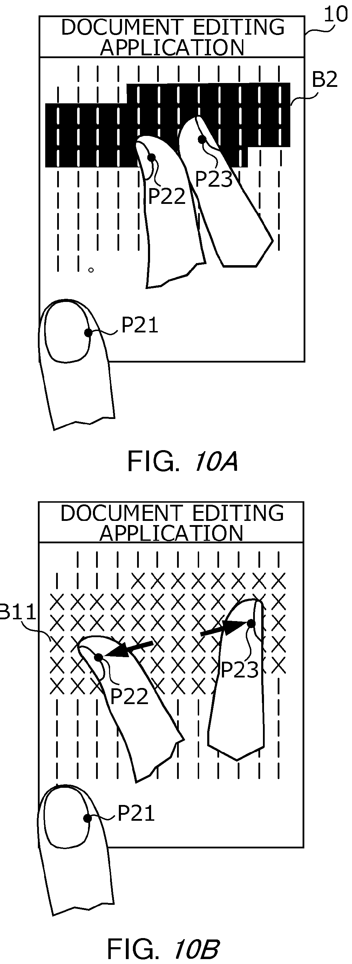

FIG. 10 shows an example of a paste instructing operation according to the present modification. In FIG. 10, character string B2 included in the character strings is specified as a paste location as in the example in FIG. 5A. In this state, the user, who touches touch position P22 and touch position P23 on touch screen 10, performs a pinch-out operation as shown in FIG. 10B, while touching touch position P21 in the lower left area of touch screen 10, as shown in FIG. 10A.

In a state where the touch screen is touched, a pinch-out operation is performed on another area. Therefore, instructing operation determination unit 112 determines that such a pinch-out operation is a paste instructing operation, and acquires paste location information and supplies the clipboard control unit 102 therewith. Thereafter, clipboard control unit 102 and object display control unit 101 operate in the same manner as in the embodiment, and thus character string B11, which is constituted by objects saved on the clipboard, is pasted.

As described above, in the present modification, the acceptance and the determination of an operation is performed when the user, in the state of touching touch screen 10, performs an operation to trace an area other than the touched area, a pinch-in operation, or a pinch-out operation. With this method, even when other processing (reduction display processing, enlargement display processing, etc.) is assigned to a pinch-in operation or a pinch-out operation and an image to which such processing is to be applied is displayed, it is possible to select an object, save an object on a clipboard, specify a paste location, and paste an object.

### 2-3. Press and Hold + Pinch-in Operation/Pinch-out Operation

When a pinch-in operation or a pinch-out operation is to be performed, the acceptance of an object selecting operation or the acceptance of a paste location specifying operation, and the determination of an object specifying operation or the determination of a paste instructing operation, may be performed according to whether or not a press and hold operation is performed at the first touch position.

In the present modification, pinch-in operation detector 121 supplies specifying operation determination unit 111 with information indicating a touch position measured regarding the received pinch-in operation. Also, pinch-out operation detector 122 supplies selecting operation detector 131, specifying operation detector 132, and instructing operation determination unit 112 with information indicating a touch position measured regarding the received pinch-out operation.

When a period for which the first two touch positions of the received pinch-out operation have been touched (i.e. a period continuously measured from when the two touch positions were initially measured) is no less than a predetermined period (e.g. one second), selecting operation detector 131 determines that a press and hold operation was performed at the beginning of the pinch-out operation. Regarding the measurement of the first touch positions, the positions are not necessarily exactly the same, and even if the positions are displaced by some pixels, for example, such measured positions may be regarded as the first positions.

Selecting operation detector 131 accepts a pinch-out operation that has been determined as a pinch-out operation that includes a press and hold operation at the beginning (a pinch-out operation starting with press and hold) as a selecting operation for selecting objects included in the range from the object displayed at the first position to the object displayed at the second touch position of the pinch-out operation. In the present modification, if a period for which the first two touch positions have been touched is less than the predetermined period, such an operation is not detected as an object selecting operation. Therefore, if enlargement display processing is assigned to a pinch-out operation performed on a displayed image, enlargement display processing is performed in such a case.

Such a use of different kinds of processing depending on the presence or absence of a press and hold operation is applied to other operations. For example, specifying operation detector 132 accepts a pinch-out operation starting with press and hold as a specifying operation performed to specify an area in which objects included in the range from the object displayed at the first touch position to the object displayed at the second touch position of the pinch-out operation are displayed, as a paste location.

Also, specifying operation determination unit 111 determines a pinch-in operation in which the first two touch positions on touch screen 10 displaying an image have been touched for no less than a predetermined period (a pinch-in operation starting with press and hold) as a specifying operation specifying objects included in the image. Also, instructing operation determination unit 112 determines a pinch-out operation determined as a pinch-out operation in which a press and hold operation was performed first (a pinch-out operation starting with press and hold) as an instructing operation that provides an instruction to paste objects saved on the clipboard.

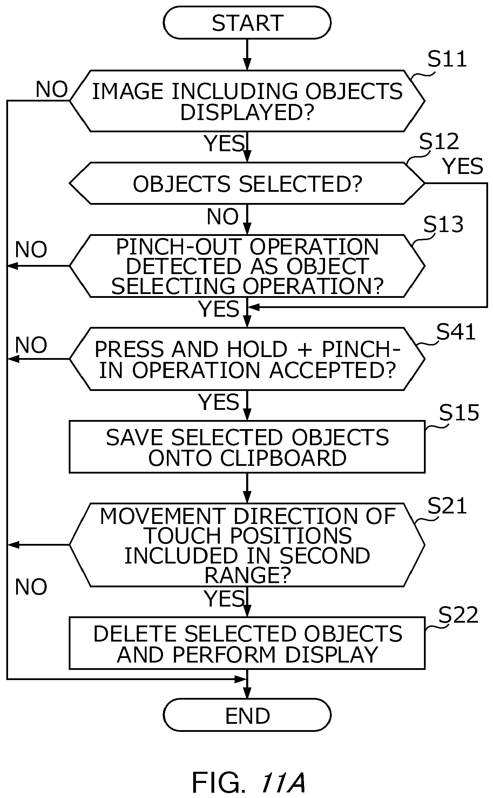

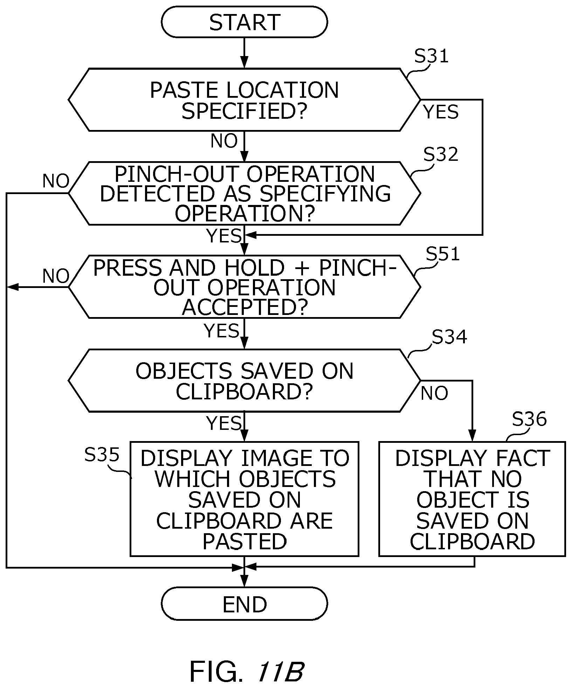

FIG. 11 shows an examples of operation procedures for save processing and paste processing according to the present modification. FIG. 11A shows an example of an operation procedure for save processing. In this example, first, steps from step S11 shown in FIG. 6 (determination regarding whether or not a displayed image is present) to step S13 (determination regarding whether or not a selecting operation has been accepted) are performed. Next, smartphone 1 (specifying operation determination unit 111) determines whether or not a pinch-in operation starting with press and hold has been detected as an object specifying operation (S41).

Upon determining that such an operation has not been accepted in step S41 (NO), smartphone 1 terminates this operation procedure. Upon determining that such an operation has been accepted (YES), smartphone 1 performs step S15 (saving onto the clipboard) and the subsequent operations. FIG. 11B shows an example of an operation procedure for paste processing. In this example, first, step S31 shown in FIG. 7 (determination regarding paste location specification) and step S32 (determination regarding whether or not a specifying operation has been accepted) are performed.

Next, smartphone 1 (instructing operation determination unit 112) determines whether or not a pinch-out operation starting with press and hold has been detected as a paste instructing operation (step S51). Upon determining that such an operation has not been accepted in step S51 (NO), smartphone 1 terminates this operation procedure. Upon determining that such an operation has been accepted (YES), smartphone 1 performs step S34 (determination regarding whether or not objects are saved) and the subsequent operations.

With a conventional method, as described above, it is necessary to perform a series of operations i.e. after performing press and hold and select to display a pop-up menu, select an option from the menu. In contrast, in order to paste an object to a different location using the present modification, although the user need to perform a press and hold operation, the user need only perform a pinch-in operation or a pinch-out operation instead of the series of conventional operations after performing the press and hold operation. When selecting an option from the menu, it takes time and effort to check the position of the option that the user wishes to select. However, with the present modification, the user need only perform a pinch-in operation or a pinch-out operation, and it does not take such time and effort.

Therefore, with the present modification, compared to conventional methods, it is also possible to reduce the time and effort required when pasting an object displayed on a touch screen to another place. Also, with conventional methods, the user releases the finger once after the press and hold, and touches the option that is to be selected. Therefore, the user needs to accurately move the finger to the option. In contrast, with the present modification, the user performs a pinch-in operation or a pinch-out operation after the press and hold, without releasing the finger. Therefore, the user need not pay attention to the position to which the finger is to be moved, and it is easier to perform operations compared to conventional methods.

### 2-4. Method for Selection and Specification

Regarding the method for selecting an object and a method for specifying a paste range, any of the methods in the above-described examples and a conventional method may be combined. For example, it is possible to save an object selected using a conventional method onto the clipboard, using an object specifying operation (pinch-in operation) described in the embodiment. Also, it is possible to paste an object to a paste location specified though the touch + trace operation described in the above-described modifications, using an instructing operation (pinch-out operation) described in the embodiment. In any of the cases, if at least the methods described in the embodiment or the modifications are used as an object specifying operation and paste instructing operation, it is possible to reduce the time and effort required when pasting an object displayed on a touch screen to another place, compared to when conventional methods are used for such operations.

### 2-5. Functional Configuration

The functional configuration of the smartphone is not limited to that shown in FIG. 2. For example, the plurality of functional blocks shown in FIG. 2 may be integrated into one functional block. Also, when a plurality of functions are included in one functional block, one or more of the functions may be separated, and thus a new functional block may be provided.

Specifically, for example, selecting operation detector 131 and specifying operation detector 132 may be integrated into a range determination unit that determines the range of objects that are to be copied, moved, or replaced. Also, it is possible to separate the function of, upon clipboard control unit 102 saving an object to be moved on the clipboard, instructing object display control unit 101 to delete the object, and thus a delete request unit may be provided as a new functional unit. In short, it suffices if functions equivalent to the functions shown in FIG. 2 are realized in the entire functional configuration.

### 2-6. Categories of Invention

The present invention is applicable not only to a smartphone, but also to a tablet terminal and a feature phone, for example. Also, although the body of a desktop computer is not provided with a touch screen, for example, it is possible to apply the present invention to a desktop computer by connecting an external display provided with a touch screen to the desktop computer. In short, it is possible to apply the present invention to any information processing apparatus that performs processing to control a touch screen, and realizes the functions shown in FIG. 2.

Also, the present invention can be interpreted as, in addition to such an information processing apparatus, an information processing method for realizing processing that is performed by the information processing apparatus, and a program for enabling a computer that controls an information processing apparatus to function. Such a program may be provided as a recording medium such as an optical disc on which the program is recorded, or downloaded onto a computer via a network such as the Internet and installed so as to be available.

### 2-7. Processing Procedures, etc.

The processing procedures, sequences, flowcharts and the like of the embodiments described in the specification may be carried out in different orders as long as doing so does not create conflict. For example, the methods described in the specification present the elements of a variety of steps in an exemplary order, and the order is not limited to the specific order presented here.

### 2-8. Handling of Input/Output Information, etc.

Input/output information may be saved in a specific location (e.g. memory), or may be managed using a management table. Input/output information and the like may be overwritten, updated, or added to. Output information and the like may be deleted. Input Information may be transmitted to other apparatuses.

### 2-9. Software

Regardless of whether software is referred to as software, firmware, middleware, microcode, hardware description language, or by another name, "software" should be interpreted broadly as meaning commands, command sets, code, code segments, program code, programs, sub programs, software modules, applications, software applications, software packages, routines, subroutines, objects, executable files, execution threads, sequences, functions, and so on.

Additionally, software, commands, and so on may be exchanged over a transmission medium. For example, when software is transmitted from a website, a server, or another remote source using hardwired technologies such as coaxial cable, fiber optic cable, twisted pair cabling, or digital subscriber line (DSL), and/or wireless technologies such as infrared light, radio waves, or microwaves, these hardwired technologies and/or wireless technologies are included in the definition of "transmission medium".

### 2-10. Information and Signals

The information, signals, and so on described in the specification may be realized using any of a variety of different techniques. For example, data, instructions, commands, information, signals, bits, symbols, chips, and so on that may be referred to throughout all of the foregoing descriptions may be realized by voltages, currents, electromagnetic waves, magnetic fields or magnetic particles, photo fields or photons, or any desired combination thereof.

### 2-11. Meaning of "Based on"

The phrase "based on" used in the specification does not mean "based only on" unless specifically mentioned. In other words, the phrase "based on" means both "based only on" and "based at least on".

### 2-12. "And" and "Or"

In the specification, with respect to configurations that can be realized both as "A and B" and "A or B", a configuration described using one of these phrases may be used as a configuration described by the other of these phrases. For example, if the phrase "A and B" is used, "A or B" may be used as long as implementation is possible without conflicting with the other phrase.

### 2-13. Variations, etc. on Embodiments

The embodiments described in the specification may be used alone, may be combined, or may be switched according to how the invention is to be carried out. Additionally, notifications of predetermined information (e.g., a notification that "X is true") are not limited to explicit notifications, and may be carried out implicitly (e.g., the notification of the predetermined information is not carried out).

Although the foregoing has described the present invention in detail, it will be clear to one skilled in the art that the present invention is not intended to be limited to the embodiments described in the specification. The present invention may be carried out in modified and altered forms without departing from the essential spirit and scope of the present invention set forth in the appended scope of patent claims. As such, the descriptions in the specification are provided for descriptive purposes only, and are not intended to limit the present invention in any way.

### Reference Signs List

1 ... Smartphone, 101 ... Object display control unit, 102 ... Clipboard control unit, 111 ... Specifying operation determination unit, 112 ... Instructing operation determination unit, 121 ... Pinch-in operation detector, 122 ... Pinch-out operation detector, 131 ... Selecting operation detector, 132 ... Specifying operation detector

## Claims

1. An information processing terminal comprising:
a display control unit that displays content that includes a plurality of selectable objects on a touch screen;
a specification determination unit that determines whether or not a pinch-in operation performed on the touch screen is a specifying operation performed to specify one or more objects included in the content displayed on the touch screen; and
a saving unit that, upon the pinch-in operation being determined as the specifying operation, saves the one or more objects specified by the specifying operation onto the clipboard.

2. An information processing terminal comprising:
an instruction determination unit that, upon a pinch-out operation being performed on a touch screen, determines whether or not the pinch-out operation is an instructing operation that provides an instruction to paste an object saved on a clipboard; and
a display control unit that displays content that includes a plurality of selectable objects on a touch screen, and, upon the pinch-out operation being determined as the instructing operation, displays, on the touch screen, content generated by inserting the object saved on the clipboard into the content displayed on the touch screen.

3. The information processing terminal according to claim 1,
wherein, when the pinch-in operation is performed, the specification determination unit determines that the pinch-in operation is the specifying operation if a position different from positions on which the pinch-in operation is performed is touched.

4. The information processing terminal according to claim 1, further comprising:
a first detector that accepts a selecting operation performed to select one or more objects that constitute the content,
wherein the specification determination unit determines that the pinch-in operation is the specifying operation if the pinch-in operation is performed in a state where one object is selected through the accepted selecting operation.

5. The information processing terminal according to claim 1,
wherein the specification determination unit determines that the pinch-in operation is the specifying operation if two positions touched first in the pinch-in operation are continuously touched for no less than a predetermined period.

6. The information processing terminal according to claim 4,
wherein the content is constituted by the plurality of objects arranged on the touch screen according to a predetermined rule, and
the first detector accepts an operation performed to select objects included in a range from a first object displayed at a first touch position to a second object displayed at a second touch position of the pinch-in operation, as the selecting operation.

7. The information processing terminal according to claim 4,
wherein, upon a trace operation through which a plurality of objects arranged along a predetermined rule are traced being performed with a position different from positions related to the trace operation being touched, the first detector accepts the operation performed to select the objects specified through the trace operation, as the selecting operation.

8. The information processing terminal according to claim 2,
the instruction determination unit determines the pinch-out operation as the instructing operation if the pinch-out operation is performed in a state where a position different from positions related to the pinch-out operation is touched.

9. The information processing terminal according to claim 2, further comprising:
a second detector that accepts a specifying operation performed to specify a paste location to which an object is to be pasted,
wherein the instruction determination unit determines the pinch-out operation as the instructing operation if the pinch-out operation is performed in a state where the paste location is specified through the accepted specifying operation.

10. The information processing terminal according to claim 2,
wherein the instruction determination unit determines the pinch-out operation as the instructing operation if two positions touched first in the pinch-out operation are continuously touched for no less than a predetermined period.
